# EUROPÄISCHE PATENTSCHRIFT

(11) **EP 0 731 273 B1**
(45) Veröffentlichungstag und Bekanntmachung des Hinweises auf die Patenterteilung: **05.02.2003**
(21) Anmeldenummer: 96810106.3
(22) Anmeldetag: 26.02.1996
(51) Int. Cl.: F04B 27/08, F04B 53/14, F04B 39/00

(54) **Kolben mit Kolbenstange**
Piston with piston rod
Piston avec tige de piston

(30) Priorität: 10.03.1995 CH 69395
(43) Veröffentlichungstag der Anmeldung: 11.09.1996
(73) Patentinhaber: AUDI AKTIENGESELLSCHAFT, 85045 Ingolstadt (DE); Bayerische Motoren Werke Aktiengesellschaft, 80809 München (DE); DaimlerChrysler AG, 70567 Stuttgart (DE)
(72) Erfinder: Kuhn, Peter, D-69469 Weinheim (DE); Obrist, Frank, A-6850 Dornbirn (AT)
(74) Vertreter: Quehl, Horst Max, Dipl.-Ing.

(56) Entgegenhaltungen:
- DE-A- 1 427 373
- DE-A- 2 035 018
- DE-A- 4 230 407
- DE-A- 4 420 680
- US-A- 4 913 001
- PATENT ABSTRACTS OF JAPAN vol. 010, no. 181 (M-492), 25.Juni 1986 & JP-A-61 028772 (SANYO ELECTRIC CO LTD;OTHERS: 01), 8.Februar 1986,
- PATENT ABSTRACTS OF JAPAN vol. 012, no. 145 (M-693), 6.Mai 1988 & JP-A-62 265478 (MATSUSHITA REFRIG CO), 18.November 1987,
- PATENT ABSTRACTS OF JAPAN vol. 014, no. 081 (M-0935), 15.Februar 1990 & JP-A-01 294977 (SANYO ELECTRIC CO LTD), 28.November 1989,
- PATENT ABSTRACTS OF JAPAN vol. 007, no. 183 (M-235), 12.August 1983 & JP-A-58 084264 (SANYO DENKI KK;OTHERS: 01), 20.Mai 1983,

## Beschreibung

Die Erfindung betrifft einen Kolben mit Kolbenstange mit den Merkmalen des Oberbegriffs des Patentanspruchs 1.

Durch die DE-A-4024319 ist ein Kolben einer hydraulischen Taumelscheibeneinrichtung bekannt, bei dem ein im wesentlichen kugelförmiger Stangenkopf einen abgeschrägten Teilabschnitt aufweist, der ein Einpassen in eine entsprechend geformte Kugelaufnahme ermöglicht, wenn sich die Stange in einer Stellung ausserhalb ihres normalen Schwenkbereichs befindet.

Weiterhin ist es bekannt, den kugelförmigen Stangenkopf formschlüssig in einer Kugelaufnahme eines Kolbens zu halten, indem aus einem sich an die halbkugelförmige Kugelaufnahme anschliessenden, umlaufenden Wandteil einzelne Lappen u-förmig herausgeschnitten und nach innen gebogen werden, so dass sie den Stangenkopf hinterfassen. Eine solcher Kolben ist jedoch für verhältnismässig hohe Drücke nicht geeignet, da dann der Durchmesser des Stangenkopfes nur wenig kleiner sein kann als der Kolbendurchmesser.

Ausserdem ist es entsprechend dem Oberbegriff des Patentanspruchs 1 bekannt, zwischen einem oberen und unteren Kolbenbereich eine unterbrechungsfrei umlaufende, durch Materialverformung gebildete Einbuchtung vorzusehen, die nach innen eine jeweils den kugelförmigen, kolbenseitigen Stangenkopf einschliessende Hinterschneidung bildet (siehe DE-A-4 420 680 oder DE-A-2 035 018).

Der Erfindung liegt die Aufgabe zugrunde, einen Kolben der genannten Art zu finden, der bei Eignung für hohe Drücke und hohe Kolbengeschwindigkeiten einfach und damit kostengünstig herstellbar ist.

Zur Lösung dieser Aufgabe wird ein Kolben mit Kolbenstange entsprechend den Merkmalen des Patentanspruchs 1 vorgeschlagen.

Weiterhin wird ein Verfahren sowie ein Formwerkzeug zur Herstellung des Kolbens mit Kolbenstange vorgeschlagen.

Vorteilhafte Ausführungsformen der Erfindung sind Gegenstand der abhängigen Patentansprüche und der folgenden Beschreibung anhand der Zeichnungen zu entnehmen.

Es zeigt:
- Fig.1: einen Querschnitt durch einen Taumelscheibenverdichter,
- Fig.2: eine Seitenansicht eines erfindungsgemässen Kolbens,
- Fig.3: einen Querschnitt durch den Kolben nach Fig.2,
- Fig.4: eine Aufsicht auf den Kolben nach Fig.2 mit drei sich in Verformungseingriff befindlichen Rollwerkzeugen,
- Fig.5: einen Querschnitt einer Form für die hydraulische Formgebung eines erfindungsgemässen Kolbens und
- Fig.6: eine Aufsicht auf die Form nach Fig.5.

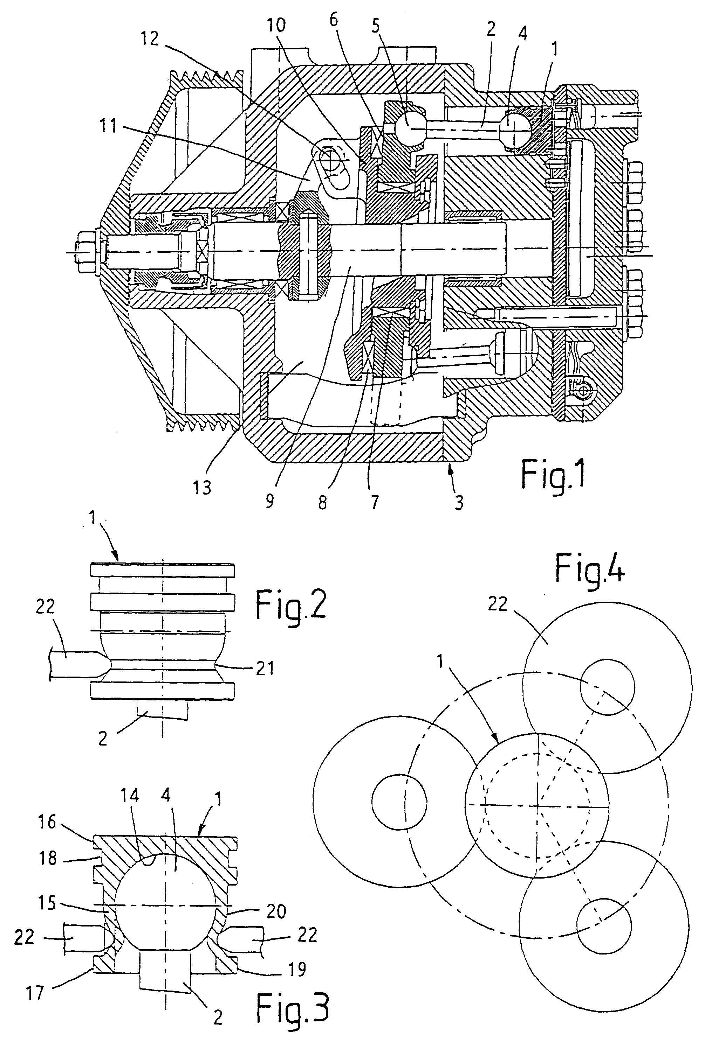

Kolben 1 mit einer kugelgelenkartigen Verbindung zwischen Kolbenstange 2 und Kolben 1 werden aufgrund der Art der Stangenbewegung z.B. für Taumelscheibenverdichter benötigt. Fig.1 zeigt ein Ausführungsbeispiel einer solchen Anwendung. Der grundsätzliche Aufbau und die grundsätzliche Wirkungsweise sind durch die Fachliteratur bekannt, wie z.B. durch die US-A-5,205,718.

Die Kolben 1 des Taumelscheibenverdichters 3, von denen beispielsweise sieben in Umfangsrichtung des Verdichters nebeneinander angeordnet sind, werden durch Stangen 2 betätigt, deren beiden Enden durch Kugelköpfe 4,5 schwenkbar einerseits am Kolben 1 und andererseits an der Taumelscheibe 6 in Kugelaufnahmen 14 gelagert sind.

Die Taumelscheibe 6 ist durch ein Radiallager 7 und ein Axiallager 8 auf einem sich mit der Antriebswelle 9 drehenden und schwenkbar gelagerten Scheibenträger 10 gehalten, so dass die Drehbewegung des schräggestellten Scheibenträgers 10 eine Taumelbewegung der Taumelscheibe 6 bewirkt und folglich die mit letzerer verbundenen Kolben 1 eine Hubbewegung ausführen. Die Verbindung zwischen der Antriebswelle 9 und dem Scheibenträger 10 erfolgt durch ein am Ende eines Mitnehmerarmes 11 vorgesehenes Mitnehmergelenk 12.

Die Schwenkbewegung des Scheibenträgers 10 und der auf diesem gelagerten Taumelscheibe 6 um das Mitnehmergelenk 12 ergibt sich durch die Differenz der beidseitig der Kolben 1 wirkenden Drücke. Entsprechend der Neigung der Taumelscheibe ändert sich der untere Totpunkt der Kolbenbewegung während der obere Totpunkt unverändert bleibt. Je höher der Druck an der Unterseite der Kolben 1 bzw. im Triebraum 13 relativ zum Druck auf der Oberseite der Kolben 1 bzw. auf der Saugseite des Verdichters 3, umso kleiner wird die Hubweite der Kolben 1 und damit die Förderleistung des Verdichters 3. Da zur Aenderung der Neigung der Taumelscheibe Druckgas in den Triebraum geleitet wird, können dort, je nach Anwendung, hohe Drücke auftreten.

Für die Verdichtung auf hohe Drücke, die für einen überkritisch arbeitenden CO₂-Kaltdampfprozess beispielsweise 120 bar betragen, ist die Kolbenform und die Grösse der kugelförmigen Stangenköpfe 4,5 aiufgrund der hohen, am Kolben 1 wirkenden Kräfte so anzupassen, dass die Grösse des Durchmessers des Stangenkopfes 4 sich erheblich, z.B. bis auf mehr als 70 % dem Durchmesser des Kolbens 1 annähert. Die Erfindung befasst sich u.a. damit, den Kolben 1 bzw. die Verbindung zwischen diesem und der Kolbenstange 2 bei geringem Fertigungsaufwand solchen extremen Bedingungen derart anzupassen, dass sie u.a. auch durch geringe Flächenpressungen an den Kugelaufnahmen 14 besonders zuverlässig und dauerhaft ist.

Beim Ausführungsbeispiel eines erfindungsgemässen Kolbens nach Fig.2 und 3 hat der Stangenkopf 4 einen Durchmesser von ca. 70% des grössten Kolbendurchmessers. Jedoch im Verhältnis zum Kolbendurchmesser im Bereich der Anordnung des Stangenkopfes 4, dort wo der Kolben 1 nach innen abgesetzt ist, beträgt der Durchmesser des Stangenkopfes sogar mehr als 80 %, so dass die verbleibende, den Stangenkopf 4 einschliessende Dicke der seitlichen Kolbenwand 15 hinsichtlich der Festigkeitsanforderungen auf ein Minimum reduziert ist.

An seinem vorderen Bereich 16 und seinem hinteren Bereich hat der Kolben 1 eine grösseren Durchmesser, um einerseits eine Nut 18 für die Aufnahme eines nichtdargestellten Kolbenringes und andererseits eine Führungsfläche am hinteren Kolbenende vorzusehen.

Im nach innen abgesetzten mittleren Bereich 20 des Kolbens 1 ist durch Materialverformung, ausgehend von einer zylindrischen Wand, eine umlaufende Einbuchtung 21 vorgesehen, so dass sie den kugelförmigen Stangenkopf 4 so unterfasst, dass er formschlüssig sicher in der Kugelaufnahme 14 des Kolbens 1 gehalten ist.

Fig.4 zeigt schematisch ein Beispiel für die Anordnung von drehbar gelagerten, scheibenförmigen Verformungswerkzeugen 22 am Umfang des Kolbens 1 während der Herstellung der umlaufenden Einbuchtung 21, die die unlösbare Verbindung zwischen dem Kolben 1 und der Kolbenstange 2 herstellen soll. An ihrem Umfang sind die Verformungswerkzeuge 22 abgerundet, um bei ihrem Umlauf relativ zum Kolben 1 und radialem Druck gegen die Kolbenwand 15 die im Querschnitt gerundete, umlaufende Einbuchtung 21 herzustellen.

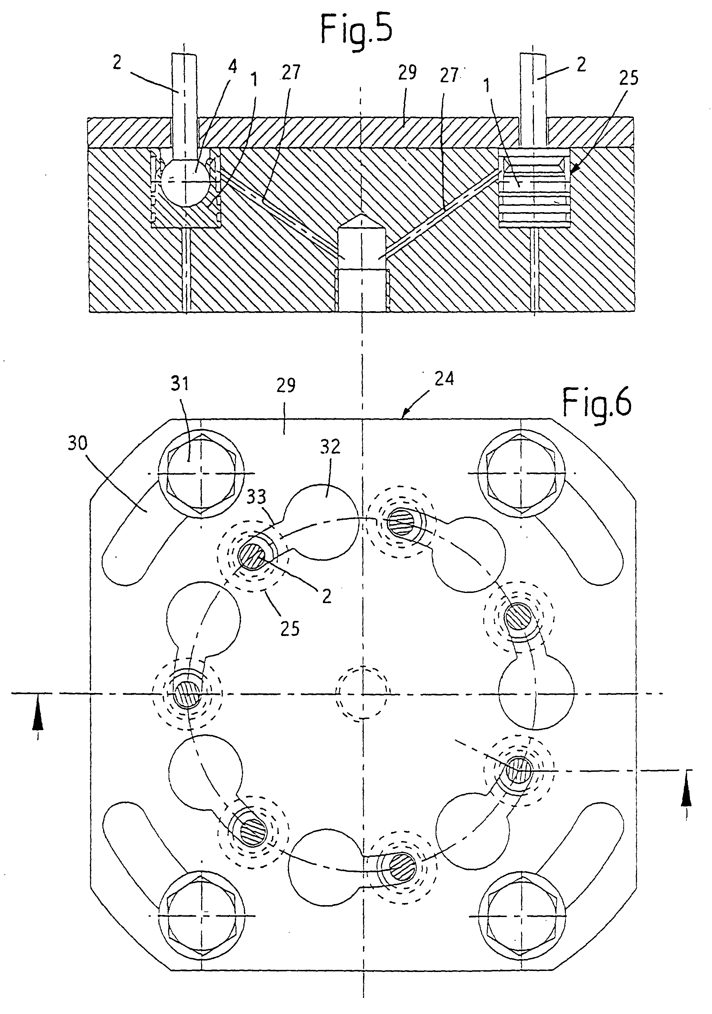

Anstatt durch mechanische Materialverformung mittels der Rollwerkzeuge 22 kann eine sich an die Form des kugelförmigen Stangenkopfes anschmiegende Verformung der Kolbenwand 15 auch durch den Druck eines Hydraulikmediums erfolgen. Fig.5 und 6 zeigen ein hierfür geeignetes Formwerkzeug 24. In diesem Formwerkzeug sind mehrere zylindrische Aufnahmeräume 25 für je einen Kolben 1 vorgesehen, in die ausgehend von einem Zentralkanal 26 mehrere Zweigleitungen 27 in einem Bereich münden, an dem der Wandbereich 15 des Kolbens 1 angeordnet ist. Die Anzahl von z.B. sieben und die Anordnung der Aufnahmeräume 25 im Formwerkzeug 24 entspricht derjenigen der Zylinderräume einer Taumelscheibenmaschine 3, so dass das Formwerkzeug 24 gleichzeitig ein Montagewerkzeug ist.

Die zylindrische Innenwand der Aufnahmeräume 25 ist zumindest an ihrem Randbereich mit kleiner Toleranz an den Aussendurchmesser des Kolbens 1 in dessen hinteren Bereich angepasst, so dass dort ein entsprechend kleiner Dichtspalt einen ausreichenden Hydraulikdruck ermöglicht, um die zuvor zylindrische Kolbenwand 15 nach innen auszuwölben, so dass der kugelförmige Stangenkopf 4 formschlüssig im Kolben 1 eingeschlossen wird. Eine Regelung des Hydraulidruckes verhindert, dass der Stangenkopf 4 im Hohlraum des Kolbens 1 festgeklemmt wird. Für die Sicherung der Kolben-Stangeneinheiten 1,2 während der hydraulischen Verformung im Formwerkzeug, 24 ist dieses durch eine Verschlussplatte 29 abgedeckt. Diese ist durch Führung an vier kreisbogenförmigen Langslöchern 30 und in diesen angeordneten Schraubenbolzen 31 zwischen zwei Positionen hin- und herverdrehbar, um die Oeffnungen 32 über den Aufnahmeräumen 25 anzuordnen, wenn die Kolben-Stangeneinheiten 1,2 in das Formwerkzeug 24 eingesetzt werden und um sie in die in Fig.6 gezeigte Verschlussposition zu bewegen, in der sich nur die Kolbenstange 2 durch einen sich an die Oeffnung 32 anschliessenden Schlitz 33 nach aussen erstrecken kann.

## Patentansprüche

1. Kolben mit Kolbenstange für hohe Drücke, insbesondere eines Verdichters einer Taumelscheibenmaschine, die mehrere in ihrer Umfangsrichtung nebeneinander angeordnete Kolben (1) aufweist, die mit Stangen (2) verbunden sind, deren beiden Enden durch kugelförmige Stangenköpfe (4,5) schwenkbar einerseits am Kolben (1) und andererseits an der Taumelscheibe in Kugelaufnahmen (14) gelagert sind, wobei der Kolben (1) zwischen einem oberen und unteren Kolbenbereich (16,17) eine unterbrechungsfrei umlaufende, durch Materialverformung gebildete Einbuchtung (21) aufweist, die nach innen eine jeweils den kugelförmigen, kolbenseitigen Stangenkopf (4) einschliessende Hinterschneidung bildet, **dadurch gekennzeichnet, dass** der Kolben (1) einen hinteren Randwulst (17) aufweist und die Einbuchtung (21) in einer Kolbenwand (15) gebildet ist.

2. Kolben mit Kolbenstange nach Anspruch 1, **dadurch gekennzeichnet, dass** der obere Kolbenbereich (16) mindestens eine Kolbenringaufnahme (18) aufweist und der untere, den Randwulst (17) aufweisende Kolbenbereich als Kolbenführung ausgebildet ist, wobei der Bereich zwischen beiden nach innen abgesetzt ist und durch eine Kolbenwand (15) gebildet ist, die nach innen die Kugelaufnahme (14) begrenzt.

3. Kolben mit Kolbenstange nach Anspruche 1 oder 2, **dadurch gekennzeichnet, dass** das Mass des Durchmessers des Stangenkopfes (4) mehr als 60 % desjenigen des grössten Kolbendurchmessers beträgt.

4. Kolben mit Kolbenstange nach Anspruch 3, **dadurch gekennzeichnet, dass** das Mass des Durchmesser des Stangenkopfes (4) mehr als 70 % desjenigen des grössten Kolbendurchmessers beträgt.

5. Verfahren zur Herstellung eines Kolbens mit Kolbenstange nach einem der Ansprüche 1 bis 4, **dadurch gekennzeichnet, dass** der Kolben (1) zusammen mit der in ihn eingesetzten Kolbenstange (2) in einen Aufnahmeraum (25) eines Formwerkzeuges (24) eingesetzt wird, an dessen zylindrischer Wand im Bereich der Anordnung der herzustellenden Einbuchtung (21) mindestens ein Hydraulikkanal (27) einmündet und die Kolbenwand (15) unter den Druck eines Hydraulikmediums gesetzt wird, so dass diese längs ihres Umfanges nach innen verformt wird und der kugelförmige Stangenkopf (4) durch die Kolbenwand (15) längs seines gesamten Umfanges hinterfasst wird.

6. Formwerkzeug für die Ausführung des Verfahrens nach Anspruch 5, **gekennzeichnet durch** mehrere zylindrische Aufnahmeräume (25) für Kolben-Stangeneinheiten (1,2) einer Taumelscheibenmaschine, in die im Bereich ihrer zylindrischen Wand mindestens ein Hydraulikkanal (27) mündet, wobei der Durchmesser zumindest im äusseren Randbereich der Aufnahmeräume (25) dichtend an das Aussenmass der Kolben (1) im Bereich ihres Randwulstes (17) angepasst ist.

7. Formwerkzeug nach Anspruch 6, **dadurch gekennzeichnet, dass** die Anzahl und Anordnung der Aufnahmeräume (25) des Formwerkzeuges (24) derjenigen der Zylinderräume einer Taumelscheibenmaschine (3) entspricht.

## Claims

1. Piston with a piston rod for high pressures, particularly a swash plate compressor, which has several circumferentially juxtaposed pistons (1), which are connected to rods (2), whose ends are pivotably mounted by spherical rod heads (4,5) on the one hand on the piston (1) and on the other on the swash plate in ball receptacles (14), wherein the piston (1) is provided between the upper and lower piston area (16,17) with an uninterrupted, circumferential indentation (21), which inwardly forms an undercut enclosing the spherical rod head (4) and being made by material working, **characterized in that** the piston (1) is provided with a rear bead (17) and the indentation is formed at a piston wall (15).

2. Piston with a piston rod according to claim 1, wherin the upper piston area (16) has at least one piston ring receptacle (18) and the lower piston area (17) is constructed as a piston guide, the area between the two is offset inwards and formed by a piston wall (15), which is inwardly bounded by the ball receptacle (14).

3. Piston with a piston rod according to claim 1 or 2, wherein the diameter of the rod head (4) is more than 60 % of the largest piston diameter.

4. Piston with a piston rod according to claim 3, wherein the diameter of the rod head (4) is more than 70 % of the largest piston diameter.

5. Method for the manufacture of a piston according to one of the claims 1 to 4, wherin the piston (1) provided with a rear bead (17), together with the piston rod (2) inserted therein, is placed in a reception space (25) of a die (24), onto whose cylindrical wall, in the vicinity of the location of the indentation (21) to be made, issues at least one hydraulic channel (27) and the piston wall (15) is placed under the pressure of a hydraulic medium, so that the latter is inwardly deformed along its circumference and the piston wall (15) is engaged behind by the spherical rod head (4) along its entire circumference.

6. Die for performing the method according to claim 5, wherein there are several cylindrical reception spaces (25) for piston-rod units (1,2) of a swash plate compressor into which issues at least one hydraulic channel (27) in the vicinity of the cylindrical wall thereof and, at least in the outer marginal area of the reception spaces (25), the diameter is adapted in close sealing manner to the external size of the piston (1) in the vicinity of its bead (17).

7. Die according to claim 6, wherein the number and arrangement of the reception spaces (25) of the die (24) corresponds to those of the cylinfder spaces of a swash plate compressor (3).

## Revendications

1. Piston avec une tige de piston pour des hautes pressions, notamment d'un compresseur destiné à une machine à disque oscillant comportant plusieurs pistons (1) disposés cote à cote en direction de leur circonférence ; lesquels pistons étant liés par des tiges (2) dont les deux extrémités sont logées de façon pivotante aux moyen de têtes de tige (4, 5) sphériques ; d'une part sur le piston (1) et d'autre part , sur le disque oscillant dans des réception de sphères (14) ; le piston (1) présentant entre une zone de piston supérieure et inférieure (16, 17) un enfoncement (21) circonférentiel continu, formé par une déformation de matériel, lequel enfoncement forme vers l'intérieure un dégagement entourant à chaque fois une tête de tige sphérique (4) située du coté du piston , **caractérisé en ce que** le piston (1) présente un bourrelet arrière (17) et **en ce que** l'enfoncement (21) est formé dans une paroi (15) du piston.

2. Piston avec une tige de piston selon la revendication 1, **caractérisé en ce que** la zone supérieure de piston (16) comporte au moins une réception (18) pour un anneau de piston et **en ce que** la zone inférieure présentant le bourrelet de bord (17) est réalisée en tant que guidage de piston ; la zone entre les deux étant décalée vers l'intérieur et étant formée par une paroi (15) de piston délimitant vers l'intérieur la réception de la sphère (14).

3. Piston avec une tige de piston selon la revendication 1 ou 2, **caractérisé en ce que** la dimension du diamètre de la tête (4) de tige est supérieure de 60% au diamètre du piston le plus grand .

4. Piston avec une tige de piston selon la revendication 3, **caractérisé en ce que** la dimension du diamètre de la tête (4) de tige est supérieure de 70% au diamètre du piston le plus grand.

5. Procédé pour fabriquer un piston avec une tige de piston selon une des revendications 1 à 4, **caractérisé en ce que** l'on introduit le piston (1) ensemble avec la tige de piston (2) insérée dans le piston dans une chambre de réception (25) d'un outil de formage (24), où au moins un canal (27) débouche sur la paroi cylindrique de cette chambre dans la zone de la disposition de l'enfoncement (21) à réaliser et **en ce que** la paroi (15) de piston est soumise à la pression d'un médium hydraulique , de manière à ce que cette paroi soit déformée vers l'intérieur le long de sa circonférence et **en ce que** la tête (4) sphérique de tige est saisie par derrière le long de toute sa circonférence par la paroi (15) de piston.

6. Outil de formage pour réaliser le procédé selon la revendication 5 **caractérisé par** plusieurs chambres de réception (25) cylindriques pour des unités de tige de piston (1,2) d'une machine à disque oscillant, dans laquelle machine au moins un canal hydraulique (27) débouche dans la zone de la paroi cylindrique , où on adapte le diamètre de façon étanche , au moins dans la zone extérieure de bord des chambres de réception (25), au dimensions extérieures du piston (1) dans la zone de son bourrelet de bord (17).

7. Outil de formage selon la revendication 6, **caractérisé en ce que** le nombre et la disposition des chambres de réception (25) de l'outil de formage (24) correspond au nombre et à la disposition des chambres de cylindre d'une machine à disque oscillant (3).
